# EUROPÄISCHE PATENTSCHRIFT

(11) **EP 3 528 987 B1**
(45) Veröffentlichungstag und Bekanntmachung des Hinweises auf die Patenterteilung: **02.12.2020**
(21) Anmeldenummer: 16791337.5
(22) Anmeldetag: 20.10.2016
(51) Int. Cl.: B23C 3/34, B23C 3/02, F16D 3/223

(54) **VERFAHREN UND VORRICHTUNG ZUM BEARBEITEN VON KUGELBAHNEN UND FÜHRUNGSSTEGEN EINES GELENKINNENTEILS**
METHOD AND DEVICE FOR MACHINING BALL TRACKS AND GUIDE RIBS OF A JOINT INNER PART
PROCÉDÉ ET DISPOSITIF D'USINAGE DE COURONNES D'ORIENTATION À BILLES ET NERVURES DE GUIDAGE D'UNE PARTIE INTÉRIEURE DE JOINT HOMOCINÉTIQUE

(43) Veröffentlichungstag der Anmeldung: 28.08.2019
(73) Patentinhaber: GKN Driveline Deutschland GmbH, 63073 Offenbach (DE); GKN Driveline Vigo SA, 36210 Vigo (ES)
(72) Erfinder: FERNÁNDEZ MAROTO, Miguel Ángel, 36206 Vigo (ES); LÓPEZ GIRÁLDEZ, Miquel Ángel, 36318 Vigo (ES); FRANKE, Horst, 08058 Zwickau (DE)
(74) Vertreter: Neumann Müller Oberwalleney & Partner Patentanwälte
(86) Internationale Anmeldenummer: PCT/EP2016/075280
(87) Internationale Veröffentlichungsnummer: WO 2018/072835

(56) Entgegenhaltungen:
- EP-A2- 1 716 966
- DE-B3-102007 037 164

## Beschreibung

Die Erfindung betrifft ein Verfahren und eine Vorrichtung zum Bearbeiten von Gelenkinnenteilen von Gleichlaufgelenken. Solche Gelenkinnenteile weisen eine Längsachse A auf und umfassen zumindest eine Führungsfläche, mittels derer das Gelenkinnenteil zu einem Kugelkäfig winkelbeweglich geführt ist. Auf dieser Führungsfläche ist eine Mehrzahl von über dem Umfang verteilten Kugelbahnen ausgebildet, welche die Führungsfläche in eine entsprechende Mehrzahl von Führungsstegen teilen. Die Kugelbahnen sind ausgestaltet, um drehmomentübertragende Kugeln des Gleichlaufgelenks aufzunehmen..

Gleichlaufgelenke der genannten Art umfassen, neben dem hier in Rede stehenden Gelenkinnenteil, ein Gelenkaußenteil mit äußeren Kugelbahnen, drehmomentübertragenden Kugeln, die jeweils in einem Bahnpaar aus einer inneren und einer äußeren Kugelbahn geführt sind, sowie einen Kugelkäfig mit umfangsverteilten Käfigfenstern, in denen die Kugeln in einer Ebene gehalten sind. Ein in eines der beiden Gelenkteile eingeleitetes Drehmoment wird über die umfangsverteilten Kugeln auf das andere der beiden Gelenkteile übertragen. Dabei bewegen sich die Kugeln bei Abwinklung des Gelenks entlang der Kugelbahnen.

Es sind diverse Typen von Gleichlaufgelenken bekannt, wobei hinsichtlich der Beweglichkeit grundsätzlich unterschieden wird in Festgelenke und Verschiebegelenke. Dabei können Festgelenke im Wesentlichen Winkelbewegungen zwischen dem Gelenkinnenteil und dem Gelenkaußenteil ausführen und weisen, abgesehen von Fertigungstoleranzen und definiertem Axialspiel, keine Verschiebemöglichkeit auf. Solche Kugelfestgelenke werden von der Anmelderin beispielsweise in Form von AC-Gelenken (angular contact), UF-Gelenken (undercut free), SIO-Gelenk und TBJ (twin ball joint) ausgeführt. Eine Sonderbauform der Festgelenke stellt das sogenannte Gegenbahngelenk dar, welches dadurch gekennzeichnet ist, dass zwei Gruppen von Kugelbahnen vorgesehen sind, die sich in entgegengesetzte Richtungen öffnen. Gegenbahngelenke werden von der Anmelderin beispielsweise als SX-Gelenke ausgeführt.

Verschiebegelenke sind dadurch gekennzeichnet, dass sie neben einer Winkelbeweglichkeit auch eine axiale Beweglichkeit zwischen dem Gelenkinnenteil und dem Gelenkaußenteil haben. Gleichlaufverschiebegelenke ermöglichen damit einen Längenausgleich zwischen einem Eingangsteil und einem Ausgangsteil einer Antriebswelle. Beispielsweise können Gleichlaufverschiebegelenke als getriebeseitige Gelenke in Seitenwellen eingesetzt werden, die ein Achsdifferential zur Drehmomentübertragung mit einem Rad des Kraftfahrzeugs verbinden. Sie kommen aber auch in Längsantriebswellen zur Drehmomentübertragung zwischen einem Schaltgetriebe und einem Achsdifferential zum Einsatz. Gleichlaufverschiebegelenke werden von der Anmelderin beispielsweise als DO-Gelenk (double offset), VL-Gelenk (Verschiebegelenk Löbro) oder SC-Gelenk (crosstrack) ausgeführt.

Bei der Herstellung von Gelenkinnenteilen ist es bekannt, an den Werkstücken in einer gemeinsamen Aufspannung zunächst Bearbeitungsschritte an den einzelnen Kugelbahnen und anschließend Bearbeitungsschritte an den Führungsstegen vorzunehmen.

Aus der gattungsbildenden DE 10 2007 037 164 B3 sind ein Verfahren und eine Vorrichtung zur Bearbeitung von Kugelnaben für Gleichlaufgelenke mit Führungsbahnen und kugelringförmigen Lagerflächen mit folgenden Verfahrensschritten bekannt: Positionieren der von einer Werkstückspindel gehaltenen Kugelnabe im Wirkbereich des Werkzeugs; Bearbeiten der Führungsbahn; Positionieren der Kugelnabe im Wirkbereich des Werkzeugs; Bearbeiten der Lagerfläche mit dem Werkzeug, wobei die Kugelnabe in Rotation versetzt wird; Wiederholen der Verfahrensschritte bis die Lagerfläche und alle Führungsbahnen vollständig bearbeitet sind. Bei der Bearbeitung der Führungsbahnen der Kugelnabe rotiert das Werkzeug um eine zur Drehachse der Kugelnabe parallele Drehachse.

Aus der EP 1 716 966 A2 ist ein Verfahren zur Herstellung von Kugelnaben von Gleichlaufgelenken bekannt. Die Herstellung der kugelförmigen Lagerfläche erfolgt durch eine Drehbearbeitung.

Aus der WO 2006/058555 A1 ist ein Verfahren zur mechanischen Bearbeitung von Gelenkaußenteilen und Gelenkinnenteilen von Kugelgleichlaufdrehgelenken bekannt, die jeweils eine Längsachse und eine Anzahl von Kugelbahnen aufweisen. Die Kugelbahnen sind jeweils über dem Umfang in Paaren angeordnet, deren Bahnmittellinien in zueinander parallelen Ebenen liegen. Es werden jeweils die Paare von Kugelbahnen mit rotierenden Scheibenwerkzeugen bearbeitet, deren Drehachsen die jeweilige Längsachse senkrecht mit Abstand kreuzen und die koaxial zueinander gehalten und geführt werden.

Aus der DE 11 2004 001 170 B4, entsprechend der WO 2006/058556 A1, sind ein Verfahren und eine Vorrichtung zum Bearbeiten von Gelenkinnenteilen der oben genannten Art bekannt, bei dem jeweils zumindest eine Kugelbahn und zumindest ein Führungssteg simultan mechanisch bearbeitet werden. Die simultane Bearbeitung erfolgt mittels rotierender Werkzeuge. Das Werkzeug zur Herstellung der Führungsstege ist als Scheibenwerkzeuge gestaltet, dessen Drehachse die Längsachse des Gelenkinnenteils mit Abstand kreuzt, wobei der Vorschub ausschließlich radial zur Längsachse des Gelenkinnenteils erfolgt. Zur Herstellung der Kugelbahnen werden Scheibenwerkzeuge verwendet, deren Drehachsen die Längsachse des Gelenkinnenteils mit Abstand kreuzen, oder Fingerwerkzeuge, deren Drehachsen im Wesentlichen radial zur Längsachse des Gelenkinnenteils ausgerichtet sind.

Aus der WO 2007/096336 A1 sind eine Vorrichtung und ein Verfahren zum spanabhebenden Herstellen einer kalottenförmigen Ausnehmung in einem Werkstück bekannt. Die Vorrichtung umfasst eine Einspannvorrichtung, in die das Werkstück einspannbar ist, und ein spanabhebendes Werkzeug, das um eine Werkzeugachse rotiert. Die Werkstückachse und die Werkzeugachse sind zueinander derart geneigt, dass ein Zentralbereich des Werkzeugs beim Herstellen außer Eingriff mit dem Werkstück ist.

Aus der DE 100 56 132 A1 ist ein Verfahren zur Bearbeitung von Gelenkinnenteilen von Gleichlaufgelenken bekannt, bei dem sowohl die als Käfigbahn dienende Außenkontur als auch die Kugellaufbahnen spanabhebend bearbeitet werden. Die Bearbeitung der Kugellaufbahnen erfolgt durch ein scheibenförmiges Werkzeug mit senkrecht zur Kugellaufbahn stehender Rotationsachse. Der Durchmesser des scheibenförmigen Werkzeugs beträgt ein Mehrfaches der Kugellaufbahnbreite.

Aus der JP-S57173413 A ist ein Verfahren zum Bearbeiten einer sphärischen Fläche eines Werkstücks bekannt. Das Werkstück wird um eine Werkstückdrehachse mit einer langsamen Drehgeschwindigkeit rotiert, während das Werkzeug mit seiner zylindrischen Schneide um eine Werkzeugdrehachse mit hoher Geschwindigkeit rotiert. Die Werkzeugdrehachse schneidet die Werkstückdrehachse winklig.

Der vorliegenden Erfindung liegt die Aufgabe zugrunde, ein rationelles Verfahren zur Herstellung von Gelenkinnenteilen vorzuschlagen, das eine schnelle Bearbeitung mit hoher Fertigungsgenauigkeit ermöglicht, sowie eine entsprechende Vorrichtung zur Durchführung des Verfahrens bereitzustellen.

Eine Lösung liegt in einem Verfahren zum Bearbeiten von Kugelbahnen und Führungsstegen eines Gelenkinnenteils für ein Gleichlaufgelenk in einer Aufspannung, mit den Verfahrensschritten: mechanisches Bearbeiten zumindest einer ersten Kugelbahn in einer ersten Drehposition; Drehen des Gelenkinnenteils in eine zweite Drehposition zur Bearbeitung zumindest einer weiteren Kugelbahn; wobei während des Drehens des Gelenkinnenteils von der ersten Drehposition in die zweite Drehposition zumindest ein Führungssteg mechanisch bearbeitet wird.

Mit dem vorgeschlagenen Verfahren lassen sich Gelenkinnenteile mit hoher Fertigungsgenauigkeit in minimaler Bearbeitungszeit herstellen. Konkret wird für die Bearbeitung der Kugelbahnen und der Führungsstege nur so viel Zeit benötigt, wie sonst üblicher Weise nur für die Bearbeitung der Kugelbahnen erforderlich ist. Dadurch, dass die Bearbeitung der Führungsstege jeweils zwischen der Bearbeitung zweier Kugelbahnen im Rahmen der Verdrehung von einer Drehposition zur nächsten erfolgt, also zeitlich versetzt, beeinflussen die beiden Bearbeitungsprozesse sich nicht gegenseitig.

Mit dem Verfahren lassen sich Gelenkinnenteile insbesondere für all diejenigen Gelenktypen bearbeiten, bei denen eine relative Führung zwischen der Außenfläche des Gelenkinnenteils und der Innenfläche des Kugelkäfigs vorgesehen ist. Dies können alle der eingangs genannten Gelenktypen sein. Das fertig bearbeitete Gelenkinnenteil umfasst eine Längsachse, eine Mehrzahl von über dem Umfang verteilten Kugelbahnen zur Aufnahme von drehmomentübertragenden Kugeln sowie eine Mehrzahl von in Umfangsrichtung jeweils zwischen zwei Kugelbahnen gebildeten Führungsstegen. Die über den Umfang verteilten Führungsstege bilden gemeinsam eine insbesondere sphärische Führungsfläche zur Führung des Gelenkinnenteils gegenüber einer sphärischen Innenfläche eines Kugelkäfigs. Die Anzahl der Kugelbahnen und damit der Führungsstege hängt vom Gelenktyp ab und kann gerade oder ungerade sein; sie kann beispielsweise fünf, sechs, sieben, acht oder zehn betragen.

Die Bearbeitung der Kugelbahnen, und damit entsprechend auch der Führungsstege, erfolgt in Umfangsrichtung schrittweise eine nach der anderen, beziehungsweise paarweise, ein Paar nach dem anderen. Nach der mechanischen Bearbeitung der ersten Kugelbahn beziehungsweise eines ersten Kugelbahnpaares wird das Gelenkinnenteil um den Teilungswinkel der Kugelbahnen beziehungsweise der Bahnpaare in die zweite Drehposition gedreht, welche in Umfangsrichtung der ersten Drehposition folgt. In dieser zweiten Drehposition wird dann die zweite Kugelbahn beziehungsweise das zweite Bahnpaar bearbeitet. Bei Gleichlaufgelenken mit mehreren unterschiedlich gestalteten Kugelbahnen, beispielsweise Gegenbahngelenken, bei denen sich in eine Richtung öffnende erste Kugelbahnen und sich in entgegengesetzte Richtung öffnende zweite Kugelbahnen über den Umfang abwechselnd angeordnet sind, werden vorzugsweise erst alle ersten und dann alle zweiten Kugelbahnen bearbeitet. Hierfür wird das Gelenkinnenteil nach der Bearbeitung einer ersten Kugelbahn entsprechend um zwei Teilungswinkel zur nächsten ersten Kugelbahn weitergedreht. Nach dem Bearbeiten der letzten ersten Kugelbahn wird das Gelenkinnenteil dann um einen Teilungswinkel zur ersten zweiten Kugelbahn verdreht und es erfolgt die Bearbeitung der zweiten Kugelbahnen, eine nach der anderen. Bezüglich der Verdrehbewegung ist es theoretisch auch möglich, dass die Bearbeitungswerkzeuge gegenüber dem Gelenkinnenteil verdreht werden, was allerdings technisch aufwendiger ist als das Gelenkinnenteil zu verdrehen.

Eine gemeinsame Bearbeitung eines Bahnpaares ist bei Gelenkinnenteilen für ein sogenanntes Twin-Ball-Gelenk möglich, bei denen jeweils zwei in Umfangsrichtung benachbarte Kugelbahnen in zueinander parallelen Ebenen verlaufen. Ein Twin-Ball-Gelenk hat dementsprechend eine gerade Anzahl von Kugeln und Kugelbahnen, insbesondere acht.

Das Verdrehen von einer Drehposition zur nächsten Drehposition, das auch als Indexieren bezeichnet wird, erfolgt insbesondere kontinuierlich, das heißt ohne Unterbrechung. Der Teilungswinkel von einer Drehposition zur nächsten ergibt sich aus der Anzahl und der Ausgestaltung der Kugelbahnen. Beispielsweise beträgt der Teilungswinkel von einer Drehposition zur nächsten bei einem Gelenkinnenteil mit in Radialebenen verlaufenden sechs Kugelbahnen entsprechend 60°.

Während der Indexierung läuft ein erster der Führungsstege an der Bearbeitungskontur des rotierenden Stegbearbeitungswerkzeugs entlang, so dass die Außenfläche des Führungsstegs entsprechend mechanisch bearbeitet wird. Das Stegbearbeitungswerkzeug rotiert um eine zur Längsachse des Gelenkinnenteils radiale Drehachse. Die Bearbeitungskontur des Stegbearbeitungswerkzeugs ist vorzugsweise so gestaltet, dass, im Querschnitt durch das Gelenkinnenteil betrachtet, eine gedachte Tangente, die im Eingriffsbereich zwischen einem bearbeiteten Führungssteg und der Bearbeitungskontur an die Außenfläche des Stegs angelegt ist, winklig zur Drehachse verläuft. Diese Tangente bildet bei Rotation um die Werkzeugdrehachse einen Konus, dessen Scheitelpunkt auf der Drehachse liegt. In Konkretisierung kann die Bearbeitungskontur nach einer ersten Möglichkeit durch eine oder mehrere umfangsverteilte Schneiden beziehungsweise Schneidkanten gebildet sein, die bei Rotation um die Drehachse im jeweiligen Kontaktpunkt mit dem zu bearbeitenden Führungssteg einen Ring definieren. Alternativ kann die Bearbeitungskontur auch durch eine um die Werkzeugdrehachse umlaufende Schleiffläche gebildet sein, beziehungsweise Teil eines Schleifkörpers mit einer solchen Schleiffläche sein. Die Schleiffläche kann beispielsweise eine konische oder sphärische Form haben, womit ein Konusabschnitt bzw. Sphärenabschnitt mit eingeschlossen sein soll.

Nach einer bevorzugten Verfahrensführung ist vorgesehen, dass das Stegbearbeitungswerkzeug während der Bearbeitung einer Kugelbahn in der für die mechanische Bearbeitung der Führungsstege erforderlichen Bearbeitungsposition verbleibt. Es ist damit lediglich eine Zustellbewegung zu Beginn der Bearbeitung und eine Abrückbewegung am Ende der Bearbeitung des Gelenkinnenteils erforderlich. Insbesondere ist vorgesehen, dass das Stegbearbeitungswerkzeug während der mechanischen Bearbeitung der ersten Kugelbahn beziehungsweise eines ersten Bahnpaares aus der Ausgangsposition in die Bearbeitungsposition radial vorgefahren wird. In dieser Bearbeitungsposition kann das Stegbearbeitungswerkzeug verbleiben, bis der letzte Führungssteg bearbeitet ist. Nach Abschluss der Bearbeitung des letzten Führungsstegs wird das Stegbearbeitungswerkzeug aus der Bearbeitungsposition wieder in die Ausgangsposition radial zurückgefahren. Es ist jedoch auch denkbar, dass das Stegbearbeitungswerkzeug jeweils für die Bearbeitung einer Kugelbahn wieder leicht vom Gelenkinnenteil radial abgerückt wird. Dies kann insbesondere bei Verwendung einer sphärigen Bearbeitungskontur von Vorteil sein, damit das Stegwerkzeug nicht den Bearbeitungsprozess der Kugelbahnen beeinträchtigt.

Nach einer günstigen Ausführungsform ist das Stegbearbeitungswerkzeug in der Bearbeitungsposition so angeordnet, dass die Innenkonusfläche während der mechanischen Bearbeitung der Kugelbahnen kontaktfrei gegenüber dem Gelenkinnenteil ist. Mit anderen Worten ist die Geometrie beziehungsweise die Anordnung der Bearbeitungsfläche des Stegbearbeitungswerkzeugs derart, dass ein zu bearbeitender Steg ausgehend von einer Ausgangsdrehstellung beim beginnenden Indexieren zunächst mit der Bearbeitungsfläche in Eingriff kommt und mit Erreichen der nächsten Drehstellung, das heißt am Ende des Indexierens, wieder außer Eingriff mit der Bearbeitungsfläche kommt. Das Stegbearbeitungswerkzeug bleibt während dieser Verdrehung von einer Drehposition zur nächsten ortsfest unter Rotation um die eigene Achse.

Die mechanische Bearbeitung der Kugelbahnen kann sowohl mit der Fräs- als auch mit der Schleiftechnologie unter Einsatz von Finger- oder Scheibenwerkzeugen erfolgen. Zum mechanischen Bearbeiten der Führungsstege kann analog ein Fräsverfahren oder ein Schleifverfahren zum Einsatz kommen. Die Verwendung von Fräsverfahren sowohl für die Bearbeitung der Kugelbahnen als auch für die Bearbeitung der Stege ist insofern vorteilhaft, als diese trocken ausgeführt werden können. Auch eine Bearbeitung der Kugelbahnen mittels Fräsen und eine Bearbeitung der Stege mittels Schleifen, oder umgekehrt, ist denkbar.

Entsprechend der oben genannten Aufgabe wird erfindungsgemäß eine Vorrichtung zum Bearbeiten von Kugelbahnen und Führungsstegen eines Gelenkinnenteils für ein Gleichlaufgelenk in einer Aufspannung vorgeschlagen, umfassend: eine Spanneinheit zum Einspannen eines Gelenkinnenteils; ein drehend antreibbares Bahnbearbeitungswerkzeug zum mechanischen Bearbeiten der Kugelbahnen in jeweiligen Drehpositionen des Gelenkinnenteils; ein drehend antreibbares Stegbearbeitungswerkzeug zum mechanischen Bearbeiten der Führungsstege; und eine Verstelleinheit zum schrittweisen Verdrehen des Gelenkinnenteils um eine Längsachse von einer Drehposition zur nächsten; wobei das Bahnbearbeitungswerkzeug in Umfangsrichtung relativ zum Stegbearbeitungswerkzeug derart angeordnet ist, dass die Führungsstege des Gelenkinnenteils jeweils beim Verdrehen von einer Drehposition des Gelenkinnenteils zur nächsten mechanisch bearbeitet werden.

Mit der erfindungsgemäßen Vorrichtung ergeben sich dieselben Vorteile einer effizienten Fertigung wie mit dem oben genannten Verfahren, so dass diesbezüglich zur Vermeidung von Wiederholungen auf obige Beschreibung verwiesen wird. Es versteht sich, dass sich alle verfahrensbezogenen Merkmale auch auf die Vorrichtung übertragen lassen, und umgekehrt. Bauraumtechnisch ist es günstig, wenn das Stegbearbeitungswerkzeug relativ zum Bahnbearbeitungswerkzeug um mindestens 90° in Umfangsrichtung versetzt ist. Insbesondere können die beiden Werkzeuge einander etwa diametral gegenüberliegend voneinander angeordnet sein, womit eine Anordnung von 180° ± 30°, das heißt von 150° bis 210°, mit umfasst sein sollen.

Das Stegbearbeitungswerkzeug ist insbesondere um eine zur Längsachse des Gelenkinnenteils radial verlaufende Drehachse drehend antreibbar. Nach einer bevorzugten Ausgestaltung hat das Stegbearbeitungswerkzeug eine innere Bearbeitungskontur, die ausgestaltet ist, um beim Drehen des Gelenkinnenteils von einer Drehposition zur nächsten eine jeweilige Stegfläche mechanisch zu bearbeiten. Die Bearbeitungskontur weist - im Längsschnitt durch das Stegbearbeitungswerkzeug betrachtet - einen Funktionsbereich auf. Hiermit ist der Bereich gemeint, der beim Indexieren des Gelenkinnenteils mit der Außenfläche des jeweiligen Stegs in bearbeitendem Eingriff ist, um die gewünschte Stegkontur zu erzeugen. Insofern kann der Funktionsbereich auch als Bearbeitungs- oder Eingriffsbereich bezeichnet werden. Während der Bearbeitung eines Steges rotiert das Stegbearbeitungswerkzeug um die Werkzeugdrehachse, wobei der der Funktionsbereich einen Ring definiert. Insbesondere ist die Bearbeitungskontur so gestaltet, dass - in einem Querschnitt durch das Gelenkinnenteil betrachtet - eine im Eingriffsbereich an den bearbeiteten Führungssteg angelegte Tangente winklig zur Werkzeugdrehachse verläuft.

Nach einer ersten möglichen Ausgestaltung kann die Bearbeitungskontur durch eine oder mehrere um die Werkzeugdrehachse umfangsverteilte Werkzeugschneiden gebildet sein, deren Anzahl beispielsweise zwischen vier und zehn liegen kann. Dabei kommt jeweils nur ein Teilbereich einer Werkzeugschneide, insbesondere ein im Wesentlichen punktförmiger Bereich, zur mechanischen Bearbeitung in Eingriff mit dem Gelenkinnenteil. Diese Bearbeitungsbereiche liegen bei Rotation um die Werkzeugdrehachse auf einem Kreisring, beziehungsweise auf einer gedachten Innenkonusfläche. Die Schneiden können im Bearbeitungsbereich gerade oder gekrümmt sein, wobei sie in einer gedachten Verlängerung die Werkzeugachse schneiden oder schräg zu dieser verlaufen können. Nach einer alternativen Ausgestaltung kann die Bearbeitungskontur eine Schleiffläche aufweisen, welche entsprechend den Funktionsbereich zum Bearbeiten der Führungsstege umfasst, beziehungsweise Teil eines Schleifkörpers mit einer solchen Schleiffläche sein. Die Schleiffläche ist vorzugsweise innenkonisch gestaltet, so dass der Bearbeitungsbereich auf einem Kreisring liegt.

Die innere Bearbeitungskontur ist insbesondere derart gestaltet und/oder wird für die mechanische Bearbeitung relativ zum Gelenkinnenteil derart angeordnet, dass diese Bearbeitungskontur in den Drehpositionen, in denen die Kugelbahnen bearbeitet werden, jeweils kontaktfrei zum Gelenkinnenteil ist. Dies ermöglicht, dass das Stegbearbeitungswerkzeug auch bei der Bearbeitung der Kugelbahnen ortsfest in der Bearbeitungsposition verbleiben kann, ohne einen Einfluss auf den jeweiligen Kugelbahn-Bearbeitungsprozess zu haben.

Nach einer möglichen Ausgestaltung kann das Bahnbearbeitungswerkzeug ein Fingerwerkzeug sein, dessen Drehachse im Wesentlichen radial zur Längsachse des Gelenkinnenteils ausgerichtet ist. Alternativ kann das Bahnbearbeitungswerkzeug als Scheibenwerkzeug gestaltet sein, dessen Drehachse die Längsachse des Gelenkinnenteils mit Abstand kreuzt.

Bevorzugte Ausführungsformen werden nachstehend anhand der Zeichnungsfiguren erläutert. Hierin zeigt:
- Figur 1: eine erfindungsgemäße Anordnung zur Durchführung eines erfindungsgemäßen Verfahrens zum Bearbeiten von Kugelbahnen und Führungsstegen eines Gelenkinnenteils für ein Gleichlaufgelenk in perspektivischer Ansicht in einer ersten Ausführungsform;
- Figur 2: ein Gelenkinnenteil eines Gleichlaufgelenks in perspektivischer Ansicht;
- Figur 3: die Anordnung aus Figur 1 beim Bearbeiten einer Kugelbahn im Rahmen der Durchführung des erfindungsgemäßen Verfahrens in einem Längsschnitt;
- Figur 4: die Anordnung gemäß Schnittlinie IV-IV aus Figur 3;
- Figur 5: die Anordnung gemäß Schnittlinie V-V aus Figur 4;
- Figur 6: die Anordnung aus Figur 1 beim Bearbeiten einer Außenfläche des Gelenkinnenteils im Rahmen der Durchführung des erfindungsgemäßen Verfahrens in einer radialen Ansicht auf die Längsachse des Gelenkinnenteils;
- Figur 7: die Anordnung aus Figur 6 in einem Längsschnitt;
- Figur 8: die Anordnung gemäß Schnittlinie VIII-VIII aus Figur 6;
- Figur 9: die Anordnung gemäß Schnittlinie IX-IX aus Figur 8;
- Figur 10: die Anordnung gemäß Schnittlinie X-X aus Figur 8;
- Figur 11: die Anordnung gemäß Schnittlinie XI-XI aus Figur 10;
- Figur 12: die Anordnung gemäß Schnittlinie XII-XII aus Figur 8; und
- Figur 13: eine erfindungsgemäße Anordnung zur Durchführung eines erfindungsgemäßen Verfahrens zum Bearbeiten von Kugelbahnen und Führungsstegen eines Gelenkinnenteils für ein Gleichlaufgelenk in perspektivischer Ansicht in einer zweiten Ausführungsform.

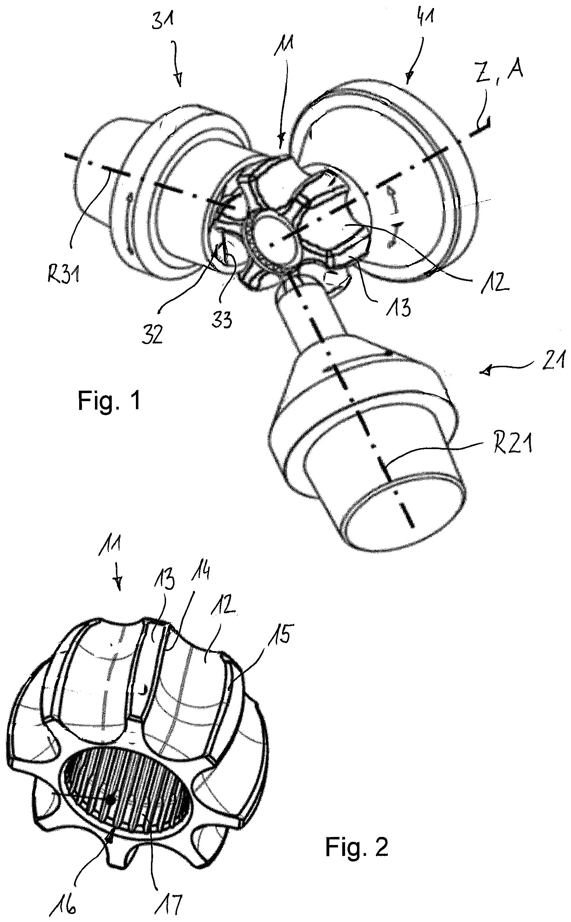

Die Figuren 1 bis 12 werden nachstehend gemeinsam beschrieben. Es ist eine erfindungsgemäße Bearbeitung von Kugelbahnen und Führungsstegen eines Gelenkinnenteils 11 für ein Gleichlaufgelenk gezeigt. Die Bearbeitung des Gelenkinnenteils 11 erfolgt mittels einer erfindungsgemäßen Vorrichtung beziehungsweise mittels eines erfindungsgemäßen Verfahrens. Gleichlaufgelenke sind eine Form von Drehgelenken, die zur Drehmomentübertragung zwischen einem Gelenkinnenteil und einem Gelenkaußenteil dienen, die relativ zueinander winkelbeweglich sind. Insbesondere umfasst ein Gleichlaufgelenk ein Gelenkinnenteil mit inneren Kugelbahnen, ein Gelenkaußenteil mit äußeren Kugelbahnen, eine Mehrzahl von Kugeln, die jeweils in einem Bahnpaar aus einer inneren und einer äußeren Kugelbahn geführt sind, sowie einen Kugelkäfig mit umfangsverteilten Käfigfenstern, in dem die Kugeln in einer gemeinsamen Ebene gehalten werden. Gleichlaufgelenke können insofern auch als Kugelgleichlaufgelenke oder Kugelgleichlaufdrehgelenke bezeichnet werden.

Ein beispielhaftes Gelenkinnenteil 11 für ein Gleichlaufgelenk ist in Figur 2 gezeigt. Gelenkinnenteile 11 von Gleichlaufgelenken werden häufig auch als Kugelnaben oder Innenring (inner race) bezeichnet. Die Längsachse des Gelenkinnenteils 11 ist mit A bezeichnet und dient im Weiteren wiederholt zur Bezugnahme für die Anordnung und die Bewegungen der verwendeten Werkzeuge. Am Gelenkinnenteil 11 sind mehrere umfangsverteilte Kugelbahnen 12 erkennbar, die in Längsrichtung im Wesentlichen gleichbleibenden Querschnitt haben. Die Kugelbahnen können insbesondere als etwa halbkreisförmige Rundbahnen ausgeführt sein, oder sie können eine Querschnittskontur für einen Zweipunktkontakt mit einer zugehörigen Kugel aufweisen, beispielsweise eine elliptische oder gotische Querschnittskontur. In den Kugelbahnen 12 können drehmomentübertragende Kugeln (nicht dargestellt) des Gleichlaufgelenks längsbeweglich geführt werden. Die Kugelbahnen 12 werden voneinander getrennt durch mehrere über den Umfang verteilte Stege mit äußeren Stegflächen 13, die Teilflächen einer gedachten teilkugeligen Führungsfläche des Gelenkinnenteils 11 sind. Mit der Führungsfläche, die auch als Außenfläche bezeichnet werden kann, wird das Gelenkinnenteil 11 abwinkelbar relativ zum Kugelkäfig beziehungsweise dessen Innenfläche (nicht dargestellt) geführt. Üblicherweise ist die genannte Führungsfläche des Gelenkinnenteils 11 ein Scheibenabschnitt einer Kugel. Die Führungsfläche kann jedoch auch durch mittige Überdrehungen oder Abflachungen unterbrochen sein, so dass sie als imaginäre Führungsfläche zwei axial voneinander beabstandetete Kugelscheiben bildet, zwischen denen ein nicht führender Zwischenbereich liegt. An den Führungsstegen 13 beziehungsweise an den Begrenzungskanten der Kugelbahnen 12 sind jeweils Kantenbrechungen 14, 15 erkennbar. Koaxial zur Längsachse A weist das Gelenkinnenteil 11 eine Durchgangsöffnung 16 mit einer inneren Wellenverzahnung 17 auf, die zum Einstecken eines antreibenden Wellenzapfens vorgesehen ist.

Die erfindungsgemäße Vorrichtung umfasst ein erstes rotierendes Werkzeug 21 zur rotierenden Bearbeitung der Kugelbahnen 12 sowie ein zweites rotierendes Werkzeug 31 zur rotierenden Bearbeitung der Führungsstege 13. Die Rotationsachse des Bahnbearbeitungswerkzeugs 21 ist mit R21 und die Rotationsachse des Stegbearbeitungswerkzeugs 31 mit R31 bezeichnet. Die Vorrichtung umfasst ferner eine Einspanneinheit 41, in welcher das Gelenkinnenteil 11 aufgenommen ist. Ein strichpunktiert gezeichneter bogenförmiger Pfeil P11 deutet eine drehende Verstellmöglichkeit des Gelenkinnenteils 11 um die Längsachse A relativ zu den Werkzeugen 21, 31 an. Diese Bewegungsmöglichkeit, welche mittels einer entsprechenden Verstelleinheit (nicht dargestellt) realisiert werden kann, bildet jedoch nur eine Option. Alternativ können auch die Werkzeuge 21, 31 gegenüber dem Gelenkinnenteil 11 um die Längsachse A drehend verstellbar ausgeführt sein.

Die Kugelbahnen 12 und die Stegflächen 13 des Gelenkinnenteils 11 werden in einer Aufspannung bearbeitet. Das Bahnbearbeitungswerkzeug 21 ist in Umfangsrichtung relativ zum Stegbearbeitungswerkzeug 31 derart angeordnet, dass die Führungsstege 13 des Gelenkinnenteils 11 jeweils beim Verdrehen von einer Drehposition des Gelenkinnenteils zur nächsten mechanisch bearbeitet werden. Das Verdrehen erfolgt mittels der Verstelleinheit schrittweise um die Längsachse A von einer Drehposition zur nächsten. Die Drehpositionen sind durch die Teilungswinkel definiert, welche sich wiederum durch die Anzahl der zu bearbeitenden Kugelbahnen, beziehungsweise Kugelbahnpaare ergeben. Beispielsweise hat ein Gelenkinnenteil 11 mit sechs regelmäßig über den Umfang in Radialebenen angeordneten Kugelbahnen 12 entsprechend sechs Drehpositionen zur Bearbeitung jeweils einer zugehörigen Kugelbahn 12. Der Teilungswinkel beträgt entsprechend 60°. Entsprechend hat ein Gelenkinnenteil mit acht regelmäßig über den Umfang verteilten Kugelbahnen einen Teilungswinkel von 45°, so dass sich hieraus entsprechend acht Drehpositionen für die Bearbeitung der Kugelbahnen ergeben. Das Verdrehen von einer Drehposition zur Bearbeitung einer ersten Kugelbahn 12 zur nächsten Drehposition zur Bearbeitung der nächsten Kugelbahn, und so weiter, wird auch als Indexieren bezeichnet.

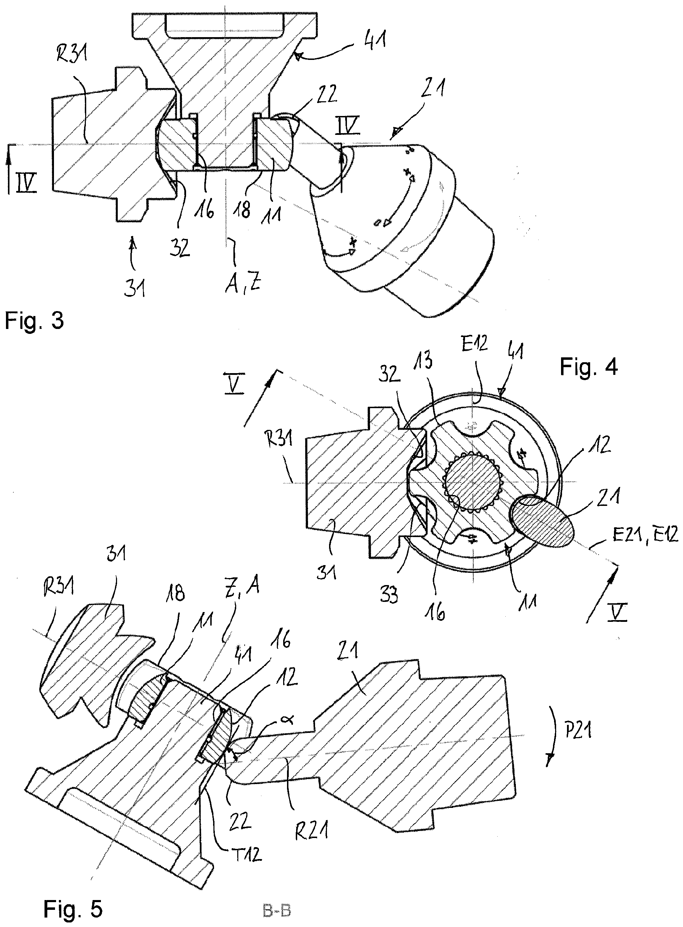

Bei der vorliegenden Ausführungsform gemäß den Figuren 1 bis 12 ist das Bahnbearbeitungswerkzeug 21 ein Fingerwerkzeug. Das Fingerwerkzeug 21 wird entsprechend der zu erzeugenden Kugelbahn 12 ausgerichtet und relativ zu dieser verfahren. Für die Bearbeitung von in Radialebenen E12 liegenden Kugelbahnen 12 wird das Fingerwerkzeug 21 so ausgerichtet, dass dessen Drehachse R21 die Längsachse A des Gelenkinnenteils 11 unter einem Winkel schneidet. Bei anderen Formen der Kugelbahnen werden die Ausrichtung und der Verfahrweg des Fingerwerkzeugs 21 entsprechend angepasst. Beispielsweise wird das Fingerwerkzeug 21 bei sogenannten Twin-Ball-Gelenken, bei denen jeweils zwei benachbarte Kugelbahnen 12 in Parallelebenen verlaufen, mit seiner Drehachse R21 in einer zu einer Längsmittelebene des Gelenkinnenteils 11 parallel verlaufenden Ebene verfahren. Dies kann unter einem Anstellwinkel der Drehachse R21 des Fingerwerkzeugs 21 relativ zur Längsachse A des Gelenkinnenteils 11 erfolgen. Konkret wird vorliegend ein Fräswerkzeug 21 verwendet, das ein Fräskopf 22 mit einzelnen über den Umfang verteilten Schneiden 23 beziehungsweise Schneidsegmenten aufweist. Die Außenkontur beziehungsweise die Ausrichtung des Fräskopfes 22 wird dabei auf die Querschnittskontur der herzustellenden Kugelbahnen 12 abgestimmt. Bei einer runden Bahnkontur kann beispielsweise ein Fräskopf 22 mit einer sphärischen Bearbeitungskontur verwendet werden, der mit seiner Rotationsachse R21 senkrecht zur Längsachse A des Gelenkinnenteils A verfahren wird. Zur Erzeugung eines unrunden Bahnquerschnitts für einen Zweipunktkontakt mit einer Kugel kann das Fingerwerkzeug 21 entsprechend winklig angestellt werden, wie in Figur 5 gezeigt.

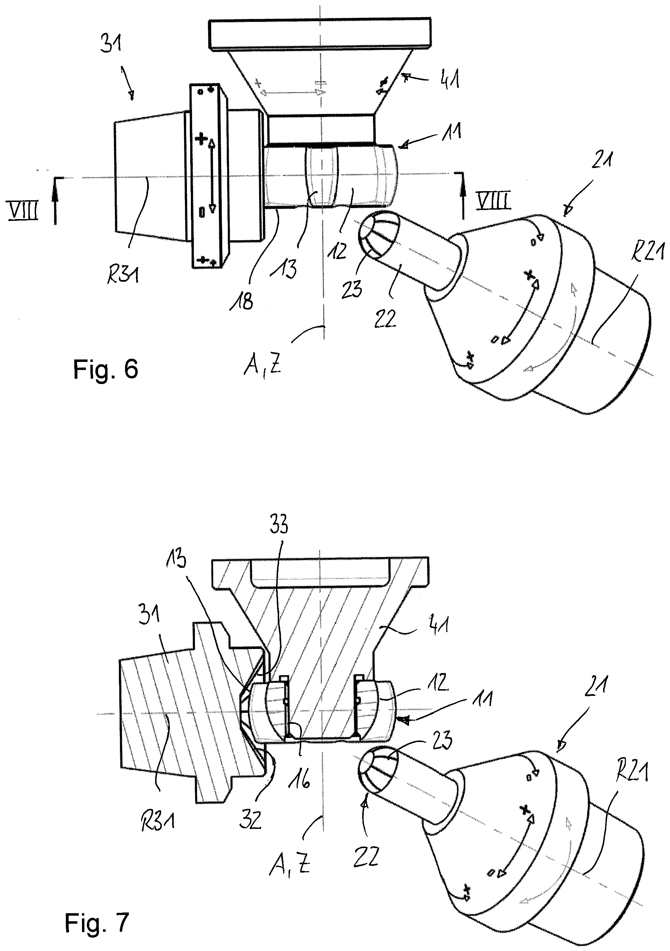

Das Stegbearbeitungswerkzeug 31 ist relativ zum Bahnbearbeitungswerkzeug 21 deutlich in Umfangsrichtung versetzt, wobei ein Umfangsversatz von mindestens 90° günstig ist, damit die Werkzeuge genügend Raum zur jeweiligen Bearbeitung haben. Die Rotationsachse R31 des Stegbearbeitungswerkzeugs 31 verläuft radial zur Längsachse A des Gelenkinnenteils 11, das heißt die Rotationsachse R31 schneidet die Längsachse A senkrecht. Es ist insbesondere in den Figuren 1 und 7 erkennbar, dass das Stegbearbeitungswerkzeug 31 eine innenkonische Bearbeitungskontur 32 aufweist, die ausgestaltet ist, um beim Drehen des Gelenkinnenteils 11 von einer Drehposition zur nächsten zumindest eine Stegfläche 13 mechanisch zu bearbeiten.

In den Figuren 3 bis 5 ist die Anordnung nach Figur 1 in einem ersten Verfahrensschritt während der Bearbeitung einer Kugelbahn 12 gezeigt. Dabei zeigt Figur 3 einen Längsschnitt in einer durch die Längsachse A des Gelenkinnenteils 11, beziehungsweise der Spannvorrichtung 41, und die Drehachse R31 des Stegbearbeitungswerkzeugs 31 aufgespannten Schnittebene. Die Bewegung des Stegbearbeitungswerkzeugs 31 relativ zum Gelenkinnenteil 11 ist so, dass das Werkzeug 21 mit seiner Rotationsachse R21 entlang der zu fertigenden Kugelbahn 12 verfahren wird. Dies ist vorliegend, wie insbesondere in den Figuren 4 und 5 erkennbar, in der zur Längsachse A radial verlaufenden Radialebene E21.

Die resultierende Vorschubbewegung des Fingerwerkzeugs 21, die schematisch mit einem Pfeil P21 dargestellt ist, erfolgt in einer durch die Längsachse A und die Drehachse R21 aufgespannten Ebene E21. Dabei wird das Fingerwerkzeug 21 so bewegt, dass die Drehachse R21 beim Verfahren des Fingerwerkzeugs 21 entlang der Kugelbahn 12 in jedem Punkt der Bahnkurve in einem definierten Anstellwinkel α relativ zu einer gedachten Tangente an den jeweiligen Punkt der Bahnkurve steht. Die Bewegungsrichtung des Werkzeugs 21 entlang der Kugelbahn 12 kann auf die Spannvorrichtung 41 zu oder von der Spannvorrichtung weg führen. In dem vorliegenden Ausführungsbeispiel sind die Kugelbahnen 12 im Längsschnitt kreisbogenförmig. Es versteht sich jedoch, dass auch jede andere Kugelbahnform hergestellt werden kann.

Das Bahnbearbeitungswerkzeug 21 fährt von einem ersten axialen Ende des Gelenkinnenteils 11 durch die herzustellende Kugelbahn 12 hindurch zum entgegengesetzten zweiten axialen Ende 18 und über dieses hinaus, wobei es am Ende des Verfahrweges außer Eingriff von der gefertigten Kugelbahn 12 ist. Diese Position ist beispielsweise in Figur 1 gezeigt.

Das Stegbearbeitungswerkzeug 31 wird vorzugsweise während der Bearbeitung der ersten Kugelbahn 12 des Gelenkinnenteils 11 in seine Bearbeitungsposition verfahren. Hierfür wird das Stegbearbeitungswerkzeug 31 mit seiner Rotationsachse R31 radial in Richtung zur Längsachse A des Gelenkinnenteils, beziehungsweise zur Aufspannachse Z in die Arbeitsposition verfahren, in der das Stegbearbeitungswerkzeug 31 an das Gelenkinnenteil 11 angenähert ist. Dabei verläuft die Rotationsachse R31 des Stegbearbeitungswerkzeugs 31 radial zur Längsachse A des Gelenkinnenteils 11. Es versteht sich jedoch, dass das Stegbearbeitungswerkzeug 31 auch vor oder nach der Bahnbearbeitung verfahren werden kann.

Um nach der vollständigen Bearbeitung einer ersten Kugelbahn 12₁ zur Bearbeitung einer weiteren Kugelbahn 12₂ überzugehen, wird das Gelenkinnenteil 11 um die Aufspannachse Z um einen Teilungswinkel der Kugelbahnen 12 verdreht, das heißt bei dem vorliegenden Gelenkinnenteil um 60°. Dieser Vorgang wird auch als Indexieren bezeichnet.

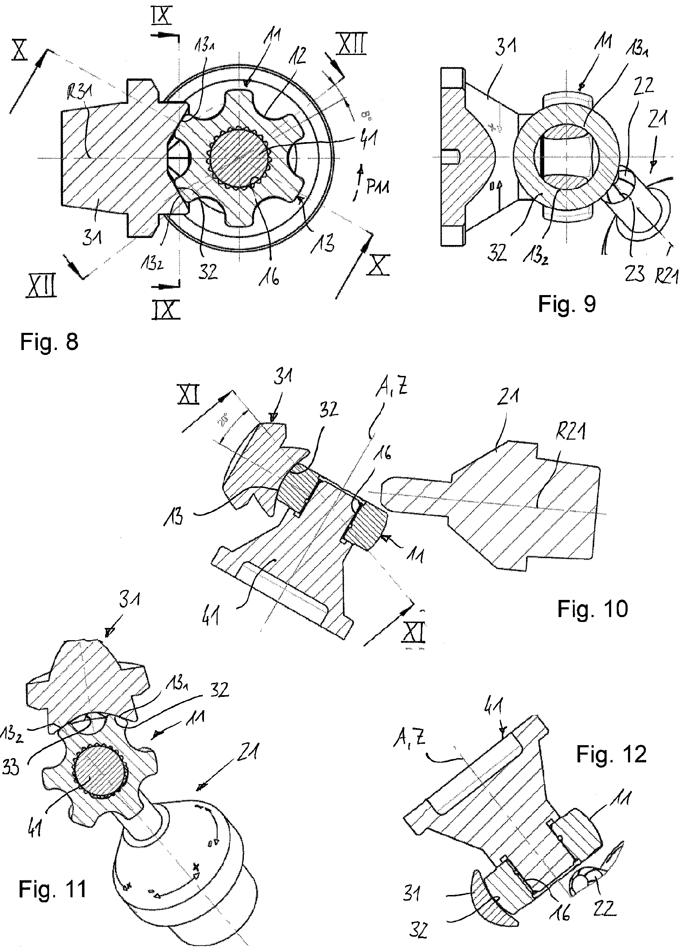

Während der Indexierung von einer Drehposition zur nächsten erfolgt die Bearbeitung der Stege des Gelenkinnenteils 11 mittels des Stegbearbeitungswerkzeugs 31. Eine Zwischenstellung während einer solchen Indexierbewegung ist in den Figuren 6 bis 12 gezeigt. Es sind zwei Führungsstege 13₁, 13₂ erkennbar, die sich in einen Hohlraum 34 des Stegbearbeitungswerkzeugs 31 hineinerstrecken und von der Bearbeitungskontur 32 des rotierenden Stegbearbeitungswerkzeugs 31 entsprechend bearbeitet werden. Wie insbesondere in Figur 7 erkennbar, sind an einer inneren Umfangsfläche des Stegbearbeitungswerkzeugs 31 mehrere Schneiden über den Umfang verteilt angeordnet, deren Schneidkanten 33 gemeinsam die Bearbeitungskontur 32 bilden. Die Schneidkanten 33 sind vorliegend gerade und verlaufen unter einem spitzen Winkel zur Werkzeugdrehachse R31. Dabei treffen sich gedachte Verlängerungen der Schneidkanten 33 in einem Punkt auf der Drehachse R31. Bei Rotation des Werkzeugs 31 bilden die Schneidkanten 33 eine innenkonische Bearbeitungskontur, die zur mechanischen Bearbeitung mit den Außenflächen 13 der Stege in Eingriff kommt. Wie insbesondere in Figur 8 erkennbar, läuft während der Indexierung von einer ersten Drehposition zur zweiten Drehposition ein erster Führungssteg 13₁ an der Bearbeitungsfläche 32 des rotierenden Stegbearbeitungswerkzeugs 31 entlang in den Hohlraum des Werkzeugs 31 hinein, während ein hierzu benachbarter zweiter Führungssteg 13₂ aus dem Hohlraum herausgedreht wird. Bei der ersten Indexierbewegung kommen die beiden Führungssteg 13₁, 13₂ mit der Bearbeitungsfläche 32 des rotierenden Stegbearbeitungswerkzeugs 31 in Kontakt, so dass deren Außenfläche 13₁, 13₂ entsprechend mechanisch bearbeitet werden. Bei jeder weiteren Indexierbewegung wird im Wesentlichen nur der jeweils in das Stegbearbeitungswerkzeug 31 hineindrehende Führungssteg 13₁ von der Bearbeitungsfläche 32 mechanisch bearbeitet, während der aus dem Werkzeug 31 herausdrehende Führungssteg 13₂ im Rahmen der vorherigen Indexierbewegung bereits bearbeitet worden ist und die gewünschte Kontur aufweist.

Am Ende einer Indexierbewegung befindet sich ein jeweiliger Steg in der Zentralposition, das heißt der Steg liegt mittig auf der Rotationsachse R31 des Stegbearbeitungswerkzeugs 31. Diese Position entspricht wiederum der Bearbeitungsposition einer Kugelbahn 12, die in den Figuren 3 bis 5 gezeigt ist. Das heißt mit dem Ende der ersten Indexierbewegung ist die zweite Drehposition erreicht, in welcher die zur ersten Kugelbahn 12₁ benachbarte zweite Kugelbahn 12₂ entsprechend mit dem Bahnbearbeitungswerkzeug 21 bearbeitet werden kann. Hierfür wird das Bahnbearbeitungswerkzeug 21 entlang der zweiten Kugelbahn 12₂ verfahren, wie bereits zuvor entlang der ersten Kugelbahn 12₁.

Nach einer günstigen Verfahrensführung verbleibt das Stegbearbeitungswerkzeug 31 während der Bearbeitung einer Kugelbahn 12, in der für die mechanische Bearbeitung der Führungsstege 13 erforderlichen Bearbeitungsposition. Das heißt das Stegbearbeitungswerkzeug 31 wird nur einmal zugestellt, nämlich zu Beginn der Bearbeitung des Gelenkinnenteils 11, beispielsweise vor oder während der Bearbeitung der ersten Kugelbahn 12. Erst am Ende der Bearbeitung des letzten Stegs 13₆ wird das Stegbearbeitungswerkzeug 31 wieder vom Gelenkinnenteil 11 abgerückt, was durch radiale Bewegung des Werkzeugs 31 von der Längsachse A weg erfolgt. Nun kann das fertig bearbeitete Gelenkinnenteil 11 von der Spannvorrichtung 41 entnommen und das nächste Gelenkinnenteil zur Bearbeitung eingespannt werden.

Damit das Stegbearbeitungswerkzeug 31 während der Bearbeitung der Kugelbahnen 12 keinen negativen Einfluss auf den Fertigungsprozess hat, ist es in der Bearbeitungsposition des Kugelbahnwerkzeugs 21 kontaktfrei gegenüber dem Gelenkinnenteil 11. Die Geometrie der Bearbeitungsfläche 32 des Stegbearbeitungswerkzeugs 31 ist vorzugsweise so gestaltet, dass eine zu bearbeitender Stegfläche 13 ausgehend von einer Ausgangsdrehstellung beim beginnenden Indexieren zunächst mit der Bearbeitungsfläche in Eingriff kommt und mit Erreichen der nächsten Drehstellung wieder außer Eingriff von der Bearbeitungsfläche 32 kommt. In dieser Position ist zwischen der Bearbeitungsfläche 32 des Stegwerkzeugs 31 und dem im Hohlraum angeordneten Steg ein Spalt vorhanden, wie insbesondere in den Figuren 4 und 5 erkennbar ist. Das Stegbearbeitungswerkzeug 31 bleibt während dieser Verdrehung von einer Drehposition zur nächsten ortsfest unter Rotation um die eigene Achse.

Die Bearbeitung der Kugelbahnen 12₁-12₆ und damit entsprechend auch der Führungsstege 13₁-13₆, erfolgt schrittweise in Umfangsrichtung eine nach der anderen. Nach der mechanischen Bearbeitung der ersten Kugelbahn 12₁ wird das Gelenkinnenteil 11 um den Teilungswinkel der Kugelbahnen 12 in die zweite Drehposition gedreht, welche in Umfangsrichtung der ersten Drehposition folgt. In dieser zweiten Drehposition wird dann die zweite Kugelbahn 12₂ bearbeitet. Anschließend wird das Gelenkinnenteil 11 um den Teilungswinkel zur nächsten Drehposition bewegt, wo die nächste Kugelbahn 12₃ bearbeitet wird. Dieser Prozess wird wiederholt, bis alle Kugelbahnen bearbeitet sind. In den Indexierbewegungen von jeweils einer Drehposition zur nächsten findet jeweils die Bearbeitung der Stege 13 statt.

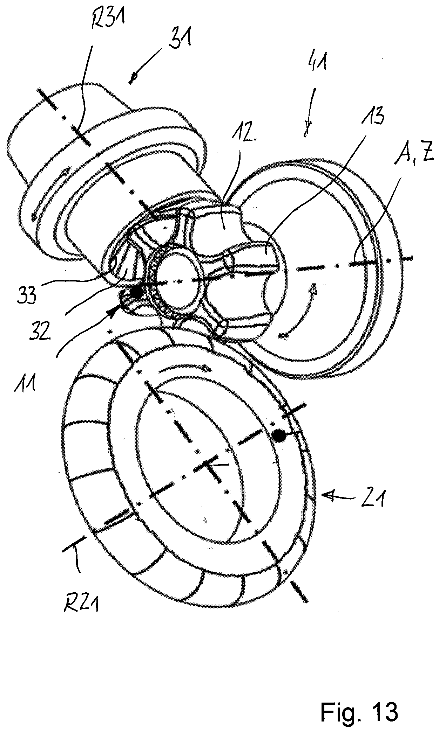

Die Figur 13 zeigt eine erfindungsgemäße Bearbeitung von Kugelbahnen 12 und Führungsstegen 13 eines Gelenkinnenteils 11 in einer abgewandelten zweiten Ausführungsform. Die vorliegende Ausführungsform entspricht weitestgehend der Ausführungsform gemäß den Figuren 1 bis 12, so dass hinsichtlich der Gemeinsamkeiten auf die obige Beschreibung Bezug genommen wird. Dabei sind gleiche beziehungsweise einander entsprechende Einzelheiten mit gleichen Bezugszeichen versehen, wie in den Figuren 1 bis 12.

Die Darstellung der Anordnung ist in dreidimensionaler Ansicht analog der Darstellung in Figur 1. Abweichend von der Ausführung nach Figur 1 hat das Bahnbearbeitungswerkzeug 21 bei der vorliegenden Ausführungsform nach Figur 13 ein scheibenförmiges Profil. Das Scheibenwerkzeug 21 kann in Form eines Fräs- oder Schleifwerkzeugs gestaltet sein, das um eine Rotationsachse R21 rotiert. Dabei kreuzt die Rotationsachse R21 die Längsachse A des Gelenkinnenteils mit Abstand. Zur Bearbeitung einer Kugelbahn 12 wird das Bahnbearbeitungswerkzeug 21 mit seiner Rotationsachse R21 äquidistant zur Kontur der herzustellenden Kugelbahn bewegt. Dabei durchfährt das Bahnbearbeitungswerkzeug 21 die Kugelbahn 12 von einem ersten axialen Ende zum entgegengesetzten zweiten axialen Ende 18. Am Ende der Bahnbearbeitung fährt das Bahnbearbeitungswerkzeug 21 aus der Kugelbahn 12 heraus, so dass es mit dieser nicht mehr in Eingriff ist. Anschließend kann das Gelenkinnenteil 11 durch eine Indexierbewegung zur Bearbeitung der nächsten Kugelbahn 12 verdreht, wobei während der Indexierbewegung die Bearbeitung der jeweils mit dem Stegbearbeitungswerkzeug 31 befindlichen Stegflächen 13 erfolgt.

Die beiden Ausführungsformen ermöglichen in vorteilhafter Weise die Herstellung von Gelenkinnenteilen 11 mit hoher Fertigungsgenauigkeit in besonders kurzer Bearbeitungszeit. Die Bearbeitung der Führungsstege 13 fällt zeitlich gesehen als Nebenprodukt der erforderlichen Indexierbewegungen ab. Dadurch, dass die Bearbeitung der Führungsstege 13 jeweils zwischen der Bearbeitung zweier Kugelbahnen 12 im Rahmen der Verdrehung von einer Drehposition zur nächsten erfolgt, also zeitlich versetzt, beeinflussen die beiden Bearbeitungsschritte sich nicht gegenseitig. Mit dem Verfahren beziehungsweise der Vorrichtung lassen sich alle Gelenkinnenteile 11 mit einer sphärischen oder zumindest teilweise sphärischen Außenfläche bearbeiten, für die eine relative Führung zwischen der Außenfläche des Gelenkinnenteils 11 und der Innenfläche des Kugelkäfigs vorgesehen ist.

### Bezugszeichenliste

- 11: Gelenkinnenteil
- 12: Kugelbahn
- 13: Führungssteg / Stegfläche
- 14: Kantenbrechung
- 15: Kantenbrechung
- 16: Durchgangsöffnung
- 17: Verzahnung
- 18: Ende

- 21: Bahnbearbeitungswerkzeug
- 22: Fräskopf
- 23: Schneiden

- 31: Stegbearbeitungswerkzeug
- 32: Bearbeitungskontur
- 33: Schneide
- 34: Hohlraum

- 41: Einspanneinheit

- A: Längsachse
- E: Ebene
- P: Pfeil (Bewegungsrichtung)
- R: Drehachse
- Z: Aufspannachse

## Patentansprüche

1. Verfahren zum Bearbeiten von Kugelbahnen (12) und Führungsstegen (13) eines Gelenkinnenteils (11) für ein Gleichlaufgelenk in einer Aufspannung, mit den Verfahrensschritten:
mechanisches Bearbeiten zumindest einer ersten Kugelbahn (12) in einer ersten Drehposition;
Drehen des Gelenkinnenteils (11) in eine zweite Drehposition zur Bearbeitung zumindest einer weiteren Kugelbahn (12),
wobei während des Drehens des Gelenkinnenteils (11) von der ersten Drehposition in die zweite Drehposition zumindest ein Führungssteg (13) mechanisch bearbeitet wird,
**dadurch gekennzeichnet,**
**dass** die Führungsstege (13) mittels eines Stegbearbeitungswerkzeugs (31) mit einer Bearbeitungskontur (32) bearbeitet werden, das um eine zur Längsachse (A) des Gelenkinnenteils (11) radiale Drehachse (R31) rotiert.

2. Verfahren nach Anspruch 1,
**dadurch gekennzeichnet,**
**dass** die zweite Drehposition der in Umfangsrichtung nächsten oder übernächsten zu bearbeitenden Kugelbahn (12) entspricht.

3. Verfahren nach einem der Ansprüche 1 oder 2,
**dadurch gekennzeichnet,**
**dass** die Drehung von der ersten Drehposition zur zweiten Drehposition kontinuierlich erfolgt.

4. Verfahren nach einem der Ansprüche 1 bis 3,
**dadurch gekennzeichnet,**
**dass** das Stegbearbeitungswerkzeug (31) während der Bearbeitung einer Kugelbahn (12) in der für die mechanische Bearbeitung der Führungsstege (13) erforderlichen Bearbeitungsposition verbleibt.

5. Verfahren nach einem der Ansprüche 1 bis 4,
**dadurch gekennzeichnet,**
**dass** das Stegbearbeitungswerkzeug (31) während der mechanischen Bearbeitung der zumindest einen ersten Kugelbahn (12) aus einer Ausgangsposition in die Bearbeitungsposition radial vorgefahren wird und in dieser Bearbeitungsposition auch bei der mechanischen Bearbeitung der weiteren Kugelbahnen (12) verbleibt.

6. Verfahren nach einem der Ansprüche 1 bis 5,
**dadurch gekennzeichnet,**
**dass** das Stegbearbeitungswerkzeug (31) nach der mechanischen Bearbeitung des letzten Steges (13) aus der Bearbeitungsposition in die Ausgangsposition radial zurückgefahren wird.

7. Verfahren nach einem der Ansprüche 1 bis 6,
**dadurch gekennzeichnet,**
**dass** das Stegbearbeitungswerkzeug (31) gegenüber dem Gelenkinnenteil (11) in der Bearbeitungsposition so positioniert wird, dass die Bearbeitungskontur (32) während der mechanischen Bearbeitung der Kugelbahnen (12) kontaktfrei gegenüber dem Gelenkinnenteil (11) ist.

8. Verfahren nach einem der Ansprüche 1 bis 7,
**dadurch gekennzeichnet,**
**dass** zum mechanischen Bearbeiten einer Kugelbahn (12) ein Fräsverfahren oder ein Schleifverfahren verwendet wird und/oder
**dass** zum mechanischen Bearbeiten eines Führungsstegs (13) ein Fräsverfahren oder ein Schleifverfahren verwendet wird.

9. Verfahren nach einem der Ansprüche 1 bis 8,
**dadurch gekennzeichnet,**
**dass** jeweils ein Führungssteg (13) mechanisch bearbeitet wird, der relativ zur vorher bearbeiteten Kugelbahn (12) um mindestens 90° in Umfangsrichtung versetzt ist.

10. Vorrichtung zum Bearbeiten von Kugelbahnen (12) und Führungsstegen (13) eines Gelenkinnenteils (11) für ein Gleichlaufgelenk in einer Aufspannung, umfassend:
eine Spanneinheit (41) zum Einspannen eines Gelenkinnenteils (11) mit einer Längsachse (A) koaxial zu einer Aufspannachse (Z);
eine Verstelleinheit zum schrittweisen Verdrehen des Gelenkinnenteils (11) um die Aufspannachse (Z) von einer Drehposition zur nächsten;
ein drehend antreibbares Bahnbearbeitungswerkzeug (21) zum mechanischen Bearbeiten der Kugelbahnen (12) in jeweiligen Drehpositionen des Gelenkinnenteils (11); und
ein drehend antreibbares Stegbearbeitungswerkzeug (31) zum mechanischen Bearbeiten der Führungsstege (13);
wobei das Bahnbearbeitungswerkzeug (21) in Umfangsrichtung relativ zum Stegbearbeitungswerkzeug (31) derart angeordnet ist, dass die Führungsstege (13) des Gelenkinnenteils (11) jeweils beim Verdrehen von einer Drehposition des Gelenkinnenteils (11) zur nächsten mechanisch bearbeitet werden,
**dadurch gekennzeichnet, dass** das Stegbearbeitungswerkzeug (31) um eine zur Längsachse (A) des Gelenkinnenteils (11) radiale Drehachse (R31) drehend antreibbar ist und eine Bearbeitungskontur (32) aufweist, die ausgestaltet ist, um beim Drehen des Gelenkinnenteils (11) von einer Drehposition zur nächsten jeweils zumindest eine Stegfläche (13) mechanisch zu bearbeiten.

11. Vorrichtung nach Anspruch 10,
**dadurch gekennzeichnet,**
**dass** die Bearbeitungskontur (32) einen Funktionsbereich zum mechanischen Bearbeiten der Führungsstege (13) aufweist, wobei der Funktionsbereich bei Rotation um die Drehachse (R31) einen Ring definiert.

12. Vorrichtung nach Anspruch 10 oder 11,
**dadurch gekennzeichnet,**
**dass**, im Querschnitt durch das Gelenkinnenteil (11) betrachtet, eine Tangente (T), die an einen Führungssteg (11) im Eingriffsbereich mit der Bearbeitungskontur (32) angelegt ist, winklig zur Drehachse (R31) verläuft.

13. Vorrichtung nach einem der Ansprüche 10 bis 12,
**dadurch gekennzeichnet,**
**dass** die Bearbeitungskontur (32) mindestens eine Werkzeugschneide (33), vorzugsweise mehrere umfangsverteilte Werkzeugschneiden (33), aufweist.

14. Vorrichtung nach einem der Ansprüche 10 bis 13,
**dadurch gekennzeichnet,**
**dass** die Bearbeitungskontur (32) eine Schleiffläche aufweist, insbesondere Teil eines Schleifkörpers ist.

15. Vorrichtung nach einem der Ansprüche 10 bis 14,
**dadurch gekennzeichnet,**
**dass** die Bearbeitungskontur (32) derart gestaltet ist, dass diese in den jeweiligen Drehpositionen des Gelenkinnenteils (11), in denen die Kugelbahnen (12) bearbeitet werden, jeweils kontaktfrei zum Gelenkinnenteil (11) ist.

16. Vorrichtung nach einem der Ansprüche 10 bis 15,
**dadurch gekennzeichnet,**
**dass** das Bahnbearbeitungswerkzeug (21) ein Fingerwerkzeug ist, dessen Drehachse (R21) im Wesentlichen radial zur Längsachse (A) des Gelenkinnenteils (11) ausgerichtet ist, oder
**dass** das Bahnbearbeitungswerkzeug (21) ein Scheibenwerkzeug ist, dessen Drehachse (R21) die Längsachse (A) des Gelenkinnenteils (11) mit Abstand kreuzt.

## Claims

1. Method for machining ball tracks (12) and guiding webs (13) of an inner joint part (11) for a constant velocity joint in one clamping,
with the method steps:
mechanically machining at least a first ball track (12) in a first rotational position; rotating the inner joint part (11) into a second rotational position for machining at least a further ball track (12),
wherein at least one guiding web (13) is mechanically machined during the rotation of the inner joint part (11) from the first rotational position to the second rotational position,
**characterised in that**
the guiding webs (13) are machined by a web machining tool (31) with a machining contour (32) which rotates around an axis of rotation (R31) that extends radially to the longitudinal axis (A) of the inner joint part (11).

2. Method according to claim 1,
**characterised in**
**that** the second rotational position corresponds to the ball track (12) to be machined next or next but one in the circumferential direction.

3. Method according to any of claims 1 or 2,
**characterised in**
**that** the rotation from the first rotational position to the second rotational position is continuously.

4. Method according to any of claims 1 to 3,
**characterised in**
**that** the web machining tool (31) remains in the machining position required for machining of the guiding webs (13) during the mechanical machining of the ball tracks (12).

5. Method according to any of claims 1 to 4,
**characterised in**
**that** the web machining tool (31) is advanced radially from a starting position into the machining position during machining of the first ball track (12) and remains in this machining position during the mechanical machining of the further ball tracks (12).

6. Method according to any of claims 1 to 5,
**characterised in**
**that** the web machining tool (31) is retracted radially from the machining position into the starting position after mechanically machining the last web (13).

7. Method according to any of claims 1 to 6,
**characterised in**
**that** the web machining tool (31) is positioned relative to the inner joint part (11) in the machining position such that the machining contour (32) is contact free relative to the inner joint part (11) during the mechanical machining of the ball tracks (12).

8. Method according to any of claims 1 to 7,
**characterised in**
**that** a milling or a grinding method is used for the mechanically machining of a ball track (12), and / or
**that** a milling or a grinding method is used for the mechanically machining of a guiding web (13).

9. Method according to any of claims 1 to 8,
**characterised in**
**that** in each case a guiding web (13) is mechanically machined which is offset by at least 90° in the circumferential direction relative to the previously machined ball track (12).

10. Device for machining ball tracks (12) and guiding webs (13) of an inner joint part (11) for a constant velocity joint in one clamping, comprising:
a clamping unit (41) for clamping an inner joint part (11) with a longitudinal axis (A) coaxially to a clamping axis (Z);
a setting unit for gradually rotating the inner joint part (11) about the clamping axis (Z) from one rotational position to the next;
a rotationally drivable track machining tool (21) for mechanically machining the ball tracks (12) in respective rotational positions of the inner joint part (11); and
a rotationally drivable web machining tool (31) for mechanically machining the guiding webs (13);
wherein the track machining tool (21) is arranged in the circumferential direction relative to the web machining tool (31) such that the guiding webs (13) of the inner joint part (11) are respectively machined upon rotation from one rotational position of the inner joint part (11) to the next,
**characterised in that** the web machining tool (31) is rotationally drivable about an axis of rotation (R31) extending radially relative to the longitudinal axis (A) of the inner joint part (11), and that the web machining tool (31) has a machining contour (32) which is configured to mechanically machine at least one web face (13) when the inner joint part (11) is rotated from one rotational position to the next.

11. Device according to claim 10,
**characterised in**
**that** the machining contour (32) has a functional portion for mechanically machining the webs (13), wherein the functional portion defines a ring upon rotation about the axis of rotation (R31).

12. Device according to claim 10 or 11,
**characterised in**
**that**, if viewed in cross-section through the inner joint part (11), a tangent (T) to a guiding web (11) in the region of engagement with the machining contour (32), extends at an angle to the axis of rotation (R31).

13. Device according to any of claims 10 to 12,
**characterised in**
**that** the machining contour (32) has at least one tool cutting edge (33), preferably a plurality of circumferentially distributed tool cutting edges (33).

14. Device according to any of claims 10 to 13,
**characterised in**
**that** the machining contour (32) has a grinding face, in particular is part of a grinding body.

15. Device according to any of claims 10 to 14,
**characterised in**
**that** the machining contour (32) is formed such that it is contact-free relative to the inner joint part (11) in the respective rotational positions of the inner joint part (11) in which the ball tracks (12) are machined.

16. Device according to any of claims 10 to 15,
**characterised in**
**that** the web machining tool (21) is a finger tool whose axis of rotation (R21) extends substantially radially to the longitudinal axis (A) of the inner joint part (11), or
**that** the web machining tool (21) is a disc tool whose axis of rotation (R21) crosses the longitudinal axis (A) of the inner joint part (11) at a distance.

## Revendications

1. Procédé d'usinage de couronnes d'orientation à billes (12) et nervures de guidage (13) d'une partie intérieure de joint (11) pour un joint homocinétique dans un serrage,
comprenant les étapes de procédé :
usinage mécanique d'au moins une première couronne d'orientation à billes (12) dans une première position de rotation ;
rotation de la partie intérieure de joint (11) dans une seconde position de rotation pour usiner au moins une autre couronne d'orientation à billes (12),
dans lequel pendant la rotation de la partie intérieure de joint (11) de la première position de rotation à la deuxième position de rotation, au moins une nervure de guidage (13) est usinée mécaniquement,
**caractérisé en ce que**
les nervures de guidage (13) sont usinées au moyen d'un outil d'usinage de nervure (31) avec un contour d'usinage (32) qui tourne sur un axe de rotation (R31) radial à l'axe longitudinal (A) de la partie intérieure de joint (11).

2. Procédé selon la revendication 1,
**caractérisé en ce que**
la seconde position de rotation correspond à la couronne d'orientation à billes (12) suivante ou encore suivante dans le sens périphérique.

3. Procédé selon la revendication 1 ou 2,
**caractérisé en ce que**
la rotation de la première position de rotation à la seconde position de rotation s'effectue en continu.

4. Procédé selon l'une des revendications 1 à 3, **caractérisé en ce que** l'outil d'usinage de nervure (31), pendant l'usinage d'une couronne d'orientation à billes (12), reste dans la position d'usinage nécessaire à l'usinage mécanique des nervures de guidage (13).

5. Procédé selon l'une des revendications 1 à 4,
**caractérisé en ce que**
l'outil d'usinage de nervure (31), pendant l'usinage mécanique de l'au moins une première couronne d'orientation à billes (12) est avancé radialement d'une position de départ à la position d'usinage et reste dans cette position d'usinage également lors de l'usinage mécanique de l'autre couronne d'orientation à billes (12).

6. Procédé selon l'une des revendications 1 à 5,
**caractérisé en ce que**
l'outil d'usinage de nervure (31) est ramené radialement de la position d'usinage à la position de départ après l'usinage mécanique de la dernière nervure (13).

7. Procédé selon l'une des revendications 1 à 6,
**caractérisé en ce que**
l'outil d'usinage de nervure (31) est ainsi positionné dans la position d'usinage par rapport à la partie intérieure de joint (11) que le contour de traitement (32) est sans contact par rapport à la partie intérieure de joint (11) pendant l'usinage mécanique des couronnes d'orientation à billes (12).

8. Procédé selon l'une des revendications 1 à 7,
**caractérisé en ce que**
pour l'usinage mécanique d'une couronne d'orientation à billes (12), un procédé de fraisage ou de meulage est employé et/ou
**en ce que** pour l'usinage mécanique d'une nervure de guidage (13), un procédé de fraisage ou de meulage est employé.

9. Procédé selon l'une des revendications 1 à 8,
**caractérisé en ce que** respectivement une nervure de guidage (13) est usinée mécaniquement, laquelle est décalée d'au moins 90° dans le sens périphérique par rapport à la couronne d'orientation à billes (12) usinée auparavant.

10. Dispositif d'usinage de couronnes d'orientation à billes (12) et nervures de guidage (13) d'une partie intérieure de joint (11) pour un joint à synchronisme dans un serrage,
comprenant :
une unité de serrage (41) pour serrer une partie intérieure de joint (11) avec un axe longitudinal (A) coaxial à un axe de serrage (Z) ;
une unité de déplacement pour la rotation par étapes de la partie intérieure de joint (11) d'une position de rotation à une autre autour de l'axe de serrage (Z) ;
un outil d'usinage de couronne d'orientation (21) pouvant être entraîné en rotation pour l'usinage mécanique des couronnes d'orientation à billes (12) dans les positions de rotation respectives de la partie intérieure de joint (11) ; et
un outil d'usinage de nervure (31) pouvant être entraîné en rotation pour l'usinage mécanique des nervures de guidage (13) ;
dans lequel l'outil d'usinage de couronnes d'orientation (21) est ainsi disposé par rapport à l'outil d'usinage de nervure (31) dans le sens périphérique que les nervures de guidage (13) de la partie intérieure de joint (11) sont usinées mécaniquement lors de la rotation, d'une position de rotation de la partie intérieure de joint (11) à l'autre,
**caractérisé en ce que** l'outil d'usinage de nervure (31) peut être entraîné en rotation sur un axe de rotation (R31) radial à l'axe longitudinal (A) de la partie intérieure de joint (11) et présente un contour d'usinage (32) qui est conçu pour usiner respectivement mécaniquement au moins une surface de nervure (13) d'une position de rotation à l'autre lors de la rotation de la partie intérieure de joint (11).

11. Dispositif selon la revendication 10,
**caractérisé en ce que**
le contour d'usinage (32) présente une plage fonctionnelle pour l'usinage mécanique des nervures de guidage (13), dans lequel la plage fonctionnelle définit un anneau lors de la rotation sur l'axe de rotation (R31).

12. Dispositif selon la revendication 10 ou 11,
**caractérisé en ce que**
vu dans la section à travers la partie intérieure de joint (11), une tangente (T) qui est aménagée contre une nervure de guidage (11) dans la zone d'engagement avec le contour d'usinage (32), est en angle par rapport à l'axe de rotation (R31).

13. Dispositif selon l'une des revendications 10 à 12,
**caractérisé en ce que**
le contour d'usinage (32) présente au moins une lame d'outil (33), de préférence plusieurs lames d'outil (33) réparties sur le pourtour.

14. Dispositif selon l'une des revendications 10 à 13,
**caractérisé en ce que**
le contour d'usinage (32) présente une surface de meulage, fait en particulier partie d'une meule.

15. Dispositif selon l'une des revendications 10 à 14,
**caractérisé en ce que**
le contour d'usinage (32) est ainsi formé que celui-ci est respectivement sans contact par rapport à la partie intérieure de joint (11), dans les positions de rotation respectives de la partie intérieure de joint (11) dans lesquelles les couronnes d'orientation à billes (12) sont usinées.

16. Dispositif selon l'une des revendications 10 à 15,
**caractérisé en ce que**
l'outil d'usinage de couronnes d'orientation (21) est un outil à doigts dont l'axe de rotation (R21) est aligné essentiellement radialement à l'axe longitudinal (A) de l'outil d'usinage de la partie intérieure de joint (11), ou
l'outil d'usinage de couronnes d'orientation (21) est un outil à disques dont l'axe de rotation (R21) croise l'axe longitudinal (A) de la partie intérieure de joint (11) avec une distance.
